# EUROPÄISCHE PATENTSCHRIFT

(11) **EP 2 064 415 B1**
(45) Veröffentlichungstag und Bekanntmachung des Hinweises auf die Patenterteilung: **03.04.2013**
(21) Anmeldenummer: 07818097.3
(22) Anmeldetag: 11.09.2007
(51) Int. Cl.: F01K 3/18, F01K 23/06, F22B 1/18, F28F 27/02, F02G 5/04

(54) **WÄRMETAUSCHERANORDNUNG**
HEAT EXCHANGER ARRANGEMENT
SYSTÈME D'ÉCHANGEUR DE CHALEUR

(30) Priorität: 19.09.2006 DE 102006043835
(43) Veröffentlichungstag der Anmeldung: 03.06.2009
(73) Patentinhaber: Bayerische Motorenwerke Aktiengesellschaft, 80809 München (DE)
(72) Erfinder: FREYMANN, Raymond, 80935 München (DE); STROBL, Wolfgang, 85072 Eichstätt (DE); HUEBNER, Walter, 85630 Grasbrunn (DE); OBIEGLO, Andreas, Greer, SC 29651 (US); DOEMELAND, Peter, 82205 Gilching (DE); KRAUS, Norbert, 86462 Langwied-Achsheim (DE); BECKER, Jürgen, 81927 München (DE); HOETGER, Michael, 13503 Berlin (DE); GÖBEL, Christian, 13355 Berlin (DE); GENSICKE, Göran, 13355 Berlin (DE)
(86) Internationale Anmeldenummer: PCT/EP2007/007893
(87) Internationale Veröffentlichungsnummer: WO 2008/034540

(56) Entgegenhaltungen:
- EP-A- 0 015 208
- EP-A- 0 605 156
- EP-A- 1 172 525
- WO-A-02/36938
- WO-A-2006/138459
- DE-A1- 10 259 488
- US-A- 5 000 003

## Beschreibung

Die Erfindung betrifft eine Wärmetauscheranordnung für eine Brennkraftmaschine mit den Merkmalen aus dem Oberbegriff des Patentanspruchs 1.

Sie geht von der europäischen Offenlegungsschrift EP 1 249 580 A1 aus. In dieser ist eine Brennkraftmaschine mit einer Wärmekraftmaschine, die nach dem Rankine-Prozess arbeitet, beschrieben. Die Wärmekraftmaschine wandelt Heißdampf eines Arbeitsmediums mittels einer Entspannungsrichtung in Bewegungsenergie um, die zur Reduzierung des Brennstoffverbrauchs und/oder zur Leistungssteigerung der Brennkraftmaschine in den Abtrieb der Brennkraftmaschine koppelbar ist. Die Wärmekraftmaschine verfügt hierfür über einen Hochtemperaturkreis und einen Niedertemperaturkreis. Für den Niedertemperaturkreis ist ein Wärmetauscher vorgesehen, mit dem das Kühlmittel der Brennkraftmaschine abkühlt und die Wärmeenergie auf das Arbeitsmedium übertragen wird. Zur Förderung des Arbeitsmediums ist eine Pumpe vorgesehen. Für den Hochtemperaturkreislauf ist eine weitere Pumpenanordnung vorgesehen, die das Arbeitsmedium durch einen weiteren Wärmetauscher fördert, der im heißen Auspuffbereich der Brennkraftmaschine angeordnet ist. Der so erzeugte Heißdampf aus dem Niedertemperaturkreislauf und dem Hochtemperaturkreislauf wird anschließend einer Entspannungsvorrichtung zugeführt, die die kinetische Energie des Heißdampfes in Bewegungsenergie umwandelt. Anschließend wird das Arbeitsmedium in einem Kondensator verflüssigt und wieder dem Niedertemperatur- und dem Hochtemperaturkreislauf zugeführt.

Eine weitere Wärmetauscheranordnung für eine Brennkraftmaschine zeigt die Offenlegungsschrift US 5,000,003.

Auch wenn die gattungsgemäße Anordnung von Brennkraftmaschine und Wärmekraftmaschine keinen spezifischen Nachteil aufweist, liegt der vorliegenden Erfindung die Aufgabe zugrunde, den Wirkungsgrad des Gesamtsystems zu optimieren.

Diese Aufgabe wird durch die Merkmale im kennzeichnenden Teil des Patentanspruchs 1 gelöst.

Durch die erfindungsgemäße Anordnung wird der Wärmeübergang aus dem Kühlmittel der Brennkraftmaschine und dem Abgas der Brennkraftmaschine an das Arbeitsmedium gegenüber dem Stand der Technik deutlich verbessert. Hierdurch steigt der Wirkungsgrad der gesamten Anordnung.

Die Anordnungen gemäß der Patentansprüche 2 und 3 sind zwei besonders bevorzugte Ausführungsbeispiele für den ersten Wärmetauscher.

Die Ausgestaltung gemäß Patentanspruch 4 ist eine besonders bevorzugte Ausführungsform der Anordnung gemäß Patentanspruch 3.

Mit den Anordnungen gemäß Patentanspruch 5 kann der thermische Fluss vom Abgas und dem Kühlmittel in das Arbeitsmedium im ersten Wärmetauscher in optimaler Weise gesteuert oder geregelt werden.

Mit der Ausgestaltung gemäß der Patentansprüche 6 und 7 kann in einfacher Weise der thermische Fluss vom Abgas in das Arbeitsmedium im zweiten Wärmetauscher geregelt werden.

Der Wirkungsgrad der Wärmekraftmaschine wird nochmals verbessert durch die Ausgestaltung gemäß Patentanspruch 8.

Mit der Ausgestaltung gemäß der Patentansprüche 9 und 10 kann im dritten Wärmetauscher der thermische Fluss vom Abgas und vom Kühlmittel in das Arbeitsmedium besonders gut eingestellt werden.

Mit der Anordnung gemäß Patentanspruch 11 ist eine sehr schnelle Temperaturregelung in den Wärmeübertragern möglich.

Mit der Ausgestaltung gemäß Patentanspruch 12 ist ein schnelles Aufheizen des Arbeitsmediums möglich.

Mit der Ausgestaltung gemäß Patentanspruch 13 wird der Wirkungsgrad der Wärmetauscheranordnung weiter verbessert.

Mit der Ausgestaltung gemäß Patentanspruch 14 ist eine besonders kompakte und hoch integrierte Bauform möglich.

Die Anordnung gemäß Patentanspruch 15 wirkt sich ebenfalls positiv auf den Wirkungsgrad der Wärmetauscheranordnung aus.

Im Folgenden ist die Erfindung anhand eines besonders bevorzugten Ausführungsbeispieles in fünf Figuren näher erläutert.
- Fig. 1: zeigt schematisch eine erfindungsgemäße Wärmetauscheranordnung für eine Brennkraftmaschine mit einer Wärmekraftmaschine.
- Fig. 2: zeigt in zwei Figuren schematisch zwei Ausführungsbeispiele für einen ersten Wärmetauscher.
- Fig. 3: zeigt schematisch ein Ausführungsbeispiel für einen zweiten Wärmetauscher.
- Fig. 4: zeigt schematisch ein Ausführungsbeispiel für einen dritten Wärmetauscher.
- Fig. 5: zeigt schematisch eine Aufheizvorrichtung mit einer Zusatzheizung.

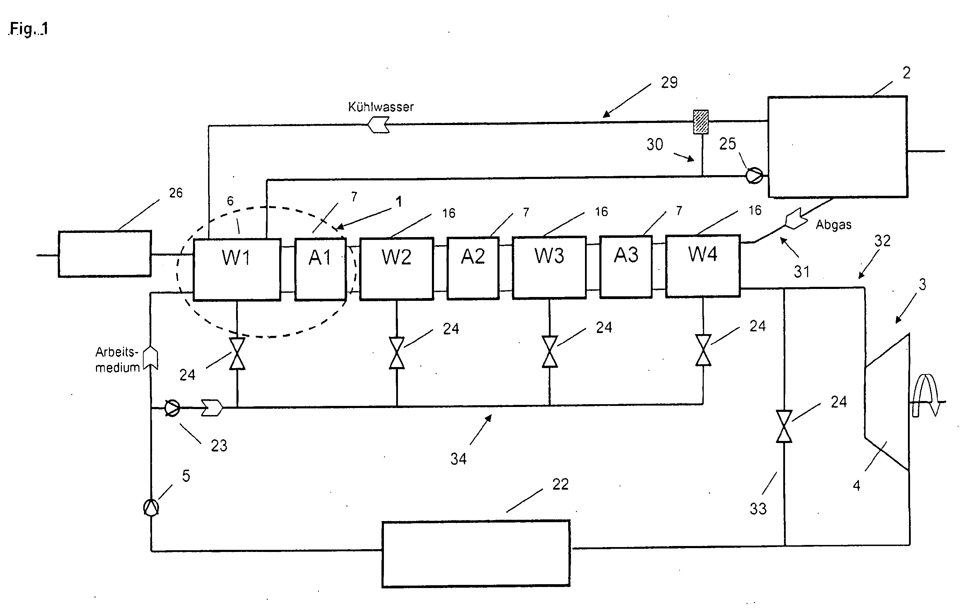

Im Folgenden gelten für die Fig. 1 bis 5 für gleiche Bauteile die gleichen Bezugsziffern. Die Durchflussrichtungen von Kühlmittel, Abgas und Arbeitsmedium durch die Bauteile sind in allen Figuren durch Pfeile dargestellt.

Fig. 1 zeigt schematisch eine erfindungsgemäße Wärmetauscheranordnung 1 in einer besonders bevorzugten Ausführungsvariante für eine Brennkraftmaschine 2 mit einer Wärmekraftmaschine 3. Die Brennkraftmaschine 2 verfügt über einen Kühlmittelkreislauf 29 zur Abfuhr von überschüssiger Wärmeenergie beim Betrieb der Brennkraftmaschine 2. Ein Kühlmittel wird hierzu im Kühlmittelkreislauf 29 von einer Kühlmittelpumpe 25 heiß aus der Brennkraftmaschine 2 herausgepumpt und zum Abkühlen durch einen ersten Wärmetauscher 6 gefördert und abgekühlt wieder zurück in die Brennkraftmaschine 2 gefördert. Mit einer ersten Kurzschlussleitung 30 kann der erste Wärmetauscher 6 zum Aufwärmen der Brennkraftmaschine mit dem Kühlmittel umgangen werden.

Ein Abgas der Brennkraftmaschine 2 verlässt diese durch einen Abgasstrang 31 und durchströmt drei dritte Wärmetauscher 16 und drei zweite Wärmetauscher 7, anschließend den ersten Wärmetauscher 6 und einen Schalldämpfer 26.

Der erste Wärmetauscher 6, die zweiten Wärmetauscher 7 und die dritten Wärmetauscher 16 werden in entgegen gesetzter Richtung des Abgases von einem, von einer Pumpe 5 geförderten Arbeitsmedium in einem Arbeitsmediumkreislauf 32 der Wärmekraftmaschine 3 durchströmt und von dem heißen Abgas und dem heißen Kühlmittel aufgeheizt, bis ein Heißdampf entsteht. Anschließend strömt das gasförmige Arbeitsmedium durch eine Entspannungseinrichtung 4, einem sog. Expander, in der die Wärmeenergie des Heißdampfes in eine Bewegungsenergie umgewandelt wird. Eine Drehrichtung einer nicht dargestellten Abtriebswelle der Entspannungseinrichtung 4 ist schematisch durch einen Pfeil angedeutet. Anschließend strömt das abgekühlte Arbeitsmedium durch einen Kondensator 22, in dem das Arbeitsmedium weiter abgekühlt und verflüssigt wird. Der Kondensator 22 kann im Extremfall auch als Kühler für das Kühlmittel der Brennkraftmaschine 2 dienen. Das flüssige Arbeitsmedium wird anschließend von der Pumpe 5 in Richtung der Wärmetauscher 6, 7, 16 weitergefördert. Um den Druck in der Entspannungseinrichtung 4 regeln zu können, ist parallel zur Entspannungseinrichtung 4 in einer zweiten Kurzschlussleitung 33 ein Drosselorgan 24 angeordnet. Somit ist es möglich diese Kurzschlussleitung 33 als Bypassleitung zu nutzen, um einen Teil oder den gesamten Dampfmassenstrom an der Entspannungseinrichtung 4 vorbeileiten zu können, beispielsweise beim Aufheizen des Arbeitsmediums.

Parallel zu den Wärmetauschern 6, 7 und 16 ist ein Arbeitsmediumeinspritzkreislauf 34 mit einer zweiten Pumpe 23 angeordnet. Über jeweils ein Drosselorgan 24 sind über den weiteren Arbeitsmediumeinspritzkreislauf 34 der erste Wärmetauscher 6 sowie die dritten Wärmetauscher 16 mit Hilfe der Pumpe 23 zusätzlich über, in Fig. 1 nicht dargestellte Eindüsvorrichtungen 20 mit Arbeitsmedium beaufschlagbar. Eine derartige Eindüsvorrichtung 20 ist aus der deutschen Offenlegungsschrift DE 100 54 022 A1 bekannt. Zur Funktionsweise der Eindüsvorrichtung 20 wird direkt auf die DE 100 54 022 A1 verwiesen.

In einer stark vereinfachten Ausführungsform der Wärmetauscheranordnung 1 können zwei zweite Wärmetauscher 7 sowie die dritten Wärmetauscher 16, oder nur einzelne Wärmetauscher 7, 16 entfallen. Mit der besonders bevorzugten, dargestellten Ausführungsform wird jedoch ein wesentlich besserer Wirkungsgrad erzielt. Um gegenüber der besonders bevorzugten Ausführungsform noch bessere Wirkungsgrade erzielen zu können, können zu der bestehenden Anordnung noch weitere zweite Wärmetauscher 7 sowie dritte Wärmetauscher 16 in die Anordnung aufgenommen werden. Allerdings ist der bauliche Aufwand dann, gemessen an der hierdurch erzielten Wirkungsgradsteigerung, sehr groß.

In einem weiteren Ausführungsbeispiel, wenn dem Abgas auf seinem Weg zum ersten Wärmetauscher 1 bereits zu viel Wärmeenergie entzogen ist, wird der erste Wärmetauscher 6 nicht von dem Abgas durchströmt, d. h. die Klappe 27 verschließt den Abgasstrang 31 teilweise oder vollständig, in diesem Fall wird das Abgas um den ersten Wärmetauscher herum in Richtung Schalldämpfer 26 abgeleitet. In einer weiteren Funktion kann mit der Klappe 27 auch eine Überhitzung des Arbeitsmediums verhindert werden.

In einem weiteren Ausführungsbeispiel kann die generierte mechanische Energie auch direkt auf die Kurbelwelle der Brennkraftmaschine eingekoppelt werden oder über einen Generator in elektrischen Strom gewandelt werden. Eine Zwischenspeicherung der Energie kann durch Wärme- oder Dampfspeicher oder elektrisch in einer Batterie oder in Kondensatoren beispielsweise wie SuperCaps gespeichert werden.

Als Arbeitsmedium kann ein frostsicheres Medium eingesetzt werden, z. B. Wasser mit Frostschutzmittel oder Alkohol oder ein Alkoholgemisch oder ein Kältemittel wie z. B. R723.

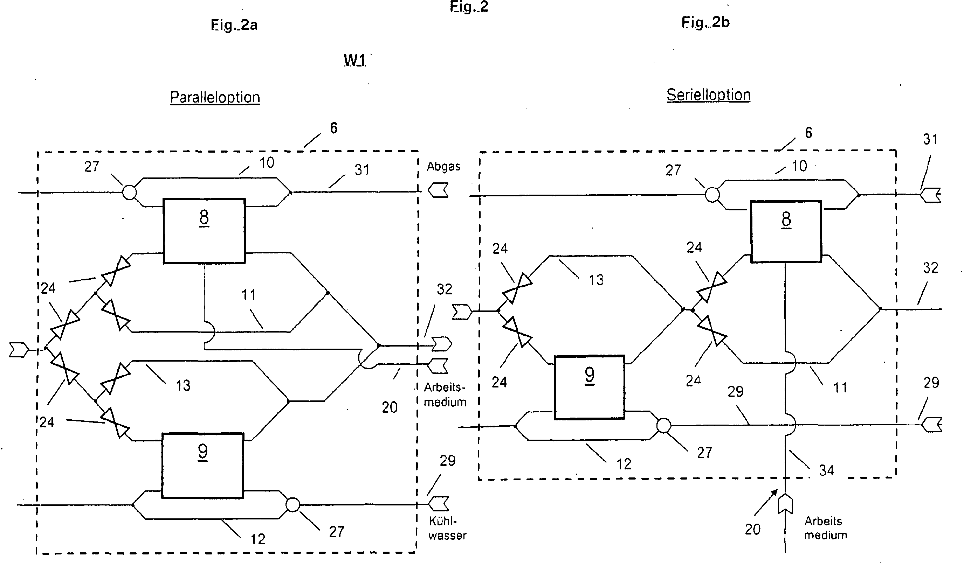

In Fig. 2, die in zwei Figuren, Fig. 2a und Fig. 2b unterteilt ist, sind schematisch zwei Varianten eines Innenaufbaus des ersten Wärmetauschers 6 dargestellt.

Fig. 2a zeigt eine Parallelanordnung eines ersten Wärmeübertragers 8 für das Abgas und das Arbeitsmedium und eines zweiten Wärmeübertragers 9 für das Kühlmittel und das Arbeitsmedium. Der erste Wärmeübertrager 8 weist einen ersten Bypass 10, der zweite Wärmeübertrager 9 weist einen zweiten Bypass 12 auf. In Strömungsrichtung des Abgases nach dem ersten Wärmeübertrager 8 ist zwischen dem Bypass 10 und dem Abgasstrang 31 eine Klappe 27 angeordnet, mit der die Abgas-Durchflussmenge durch den Wärmeübertrager 8 regel- oder steuerbar ist.

In Strömungsrichtung des Kühlmittels, vor dem zweiten Wärmeübertrager 9, ist zwischen dem Bypass 12 und dem Kühlmittelkreislauf 29 eine Klappe 27 angeordnet, mit der die Kühlmittel-Durchflussmenge durch den zweiten Wärmeübertrager 9 regel-, oder steuerbar ist.

Weiter weist der erste Wärmeübertrager 8 einen zweiten Bypass 11 und der zweite Wärmeübertrager 9 einen vierten Bypass 13 für das Arbeitsmedium auf. In Strömungsrichtung des Arbeitsmediums, vor dem ersten Wärmeübertrager 8 und dem zweiten Wärmeübertrager 9 sind an jeder Gabelung des Arbeitsmittelkreislaufes 32 Drosselorgane 24 angeordnet, mit denen jeweils die Durchflussmenge des Arbeitsmediums durch den ersten Wärmeübertrager 8 und den zweiten Wärmeübertrager 9 steuer- oder regelbar ist.

Ferner weist der erste Wärmeübertrager 8 die oben erwähnte Eindüsvorrichtung 20 für das Arbeitsmedium auf, mit der zusätzliches Arbeitsmedium für eine Schnelle Temperaturregelung in den ersten Wärmeübertrager 8 eindüsbar ist.

In weiteren Ausführungsbeispielen können die Klappen 27 stromauf und die Drosselorgane 24 auch stromab des ersten und des zweiten Wärmeübertragers 8, 9 angeordnet sein.

In Fig. 2b ist schematisch eine zweite bauliche Variante des ersten Wärmetauschers 6 dargestellt. In dieser Ausführungsform werden der erste und der zweite Wärmeübertrager 8, 9 nacheinander von dem Arbeitsmedium durchströmt, wobei in der bevorzugten, dargestellten Ausführungsform zuerst der zweite Wärmeübertrager 9 und anschließend der erste Wärmeübertrager 8 von dem Arbeitsmedium durchströmt ist. Außer der alternativen seriellen Durchströmung des ersten und des zweiten Wärmeübertragers 8, 9 gelten sämtliche unter Fig. 2a ausgeführten Erläuterungen auch für Fig. 2b.

In einer weiteren Ausführungsform wird zuerst der zweite Wärmetauscher 9 und anschließend der erste Wärmetauscher 8 von dem Arbeitsmedium durchströmt, was aber einen geringeren Wirkungsgrad zur Folge hat.

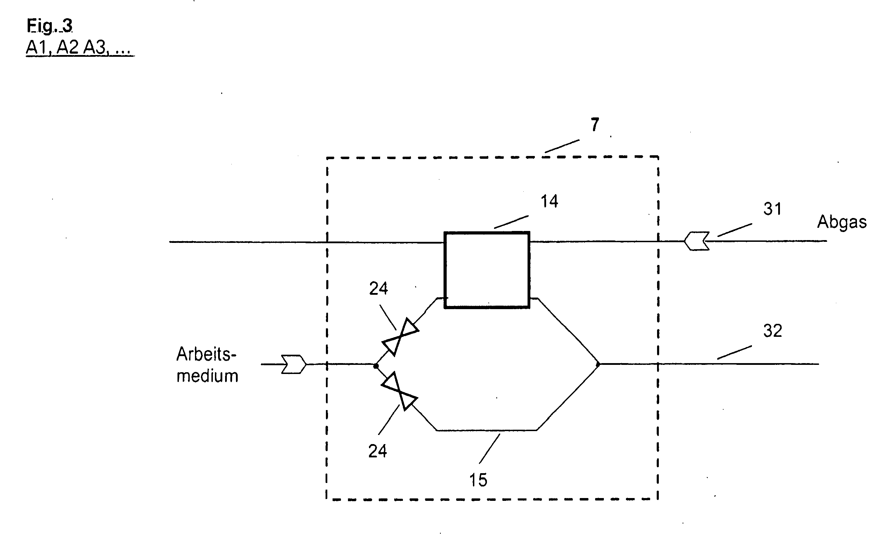

In Fig. 3 ist schematisch der innere Aufbau des zweiten Wärmetauschers 7 dargestellt. Der zweite Wärmetauscher 7 wird, wie bereits zu Fig. 1 ausgeführt, mit Abgas durchströmt, wobei das Abgas im Inneren des zweiten Wärmetauschers 7 einen dritten Wärmeübertrager 14 durchströmt. Der dritte Wärmeübertrager 14 wird zusätzlich von dem Arbeitsmedium durchströmt, wobei der dritte Wärmeübertrager 14 einen fünften Bypass 15 für das Arbeitsmedium aufweist. In Strömungsrichtung des Arbeitsmediums, vor dem dritten Wärmeübertrager 14 sind an einer Gabelung des Arbeitsmittelkreislaufes 32 Drosselorgane 24 angeordnet, mit denen jeweils die Durchflussmenge des Arbeitsmediums durch den dritten Wärmeübertrager 14 steuer- oder regelbar ist.

In einem weiteren Ausführungsbeispiel können die Drosselorgane 24 auch stromab des dritten Wärmeübertragers 14 angeordnet sein.

Der zweite Wärmetauscher 7 ist vorzugsweise eine Abgasreinigungsanlage, wie beispielsweise ein Oxidationskatalysator, ein Dreiwegekatalysator, ein Denoxkatalysator (Stickoxidsenke) oder ein Partikelfilter. Auch Kombinationen daraus oder andere Abgasnachbehandlungssysteme sind möglich.

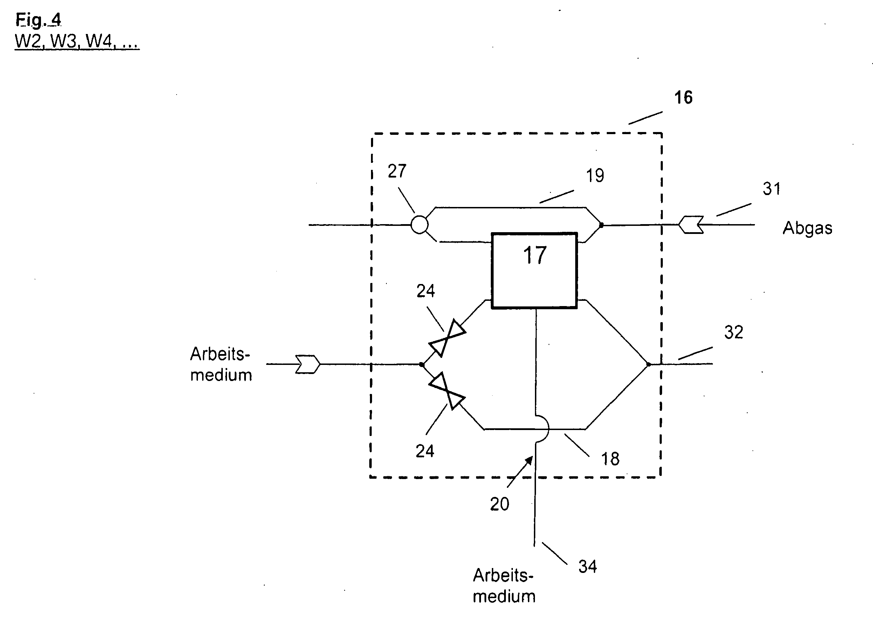

Fig. 4 zeigt schematisch den Innenaufbau eines dritten Wärmetauschers 16. Auch der dritte Wärmetauscher 16 wird, wie oben unter Fig. 1 bereits beschrieben, von dem Abgas und dem Arbeitsmedium durchströmt. Im Inneren des dritten Wärmetauschers 16 durchströmt das Abgas einen vierten Wärmeübertrager 17, der einen siebten Bypass 19 für das Abgas aufweist. Die Durchflussmenge von Abgas durch den vierten Wärmeübertrager 17 ist wiederum mit einer Klappe 27, die an einer Gabelung des Abgasstranges 31 stromab des vierten Wärmeübertragers 17 steuer- oder regelbar. Dies dient einerseits zur Einhaltung einer Mindesttemperatur für das nachfolgende Abgasnachbehandlungssystem, damit beispielsweise keine Beeinträchtigung der Katalysatorfunktion auftritt und andererseits zur Einhaltung einer Maximaltemperatur z. B. für einen Bauteilschutz. Damit kann auf Maßnahmen wie z. B. Anfettung der Brennkraftmaschine 2 zum Bauteilschutz verzichtet werden. Die Einhaltung der Maximaltemperatur wird zusätzlich durch die oben beschriebene Eindüsvorrichtung 20 unterstützt. Damit wird ein gezieltes, optimales Wärmemanagement im gesamten Abgasstrang 31 ermöglicht.

Weiter wird der vierte Wärmeübertrager 17 von dem Arbeitsmedium durchströmt, wobei ein sechster Bypass 18 für das Arbeitsmedium vorgesehen ist. Die Durchflussmenge des Arbeitsmediums durch den vierten Wärmeübertrager 17 ist wiederum über zwei Drosselorgane 24 an einer Gabelung des Arbeitsmediumkreislaufs 32 stromauf des vierten Wärmeübertragers 17 steuer- oder regelbar.

Der vierte Wärmeübertrager 17 weist ebenfalls vorzugsweise eine bereits beschriebene Eindüsvorrichtung 20 auf. In weiteren Ausführungsbeispielen können die Klappe 27 stromauf und die Drosselorgane 24 auch stromab des vierten Wärmeübertragers 17 angeordnet sein.

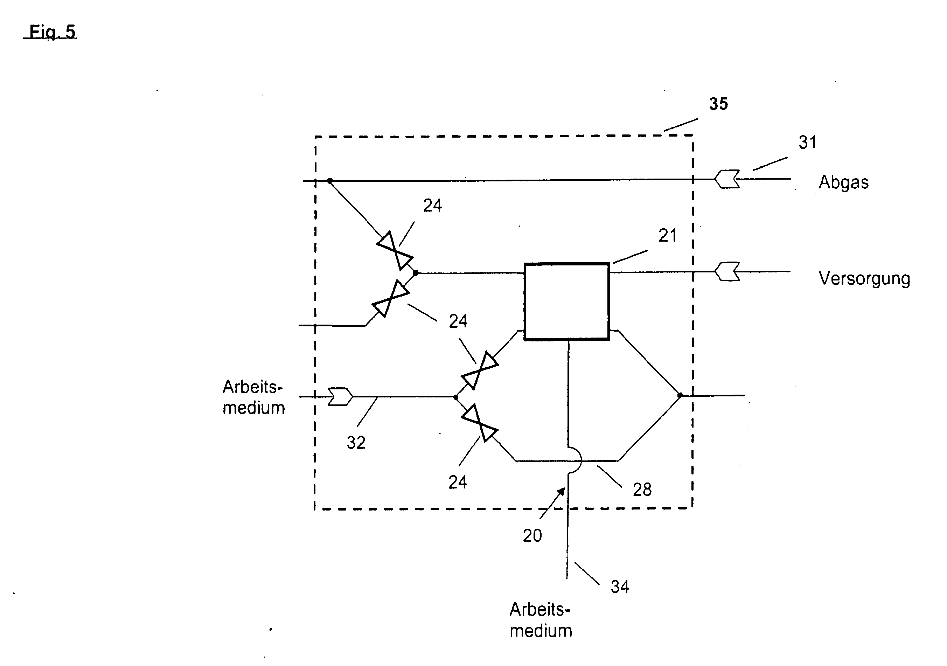

In Fig. 5 ist schematisch ein zusätzliches Modul, eine Aufheizvorrichtung 35 der erfindungsgemäßen Wärmetauscheranordnung 1 dargestellt, die in Fig. 1 nicht dargestellt ist. Diese Aufheizvorrichtung 35 weist eine Zusatzheizung 21 für das Arbeitsmedium auf. Die Zusatzheizung 21 ist von dem Arbeitsmedium durchströmbar und weist einen achten Bypass 28 auf. Zur Einstellung einer Durchflussmenge von Arbeitsmedium (steuer- oder regelbar) durch die Zusatzheizung 21 sind stromauf der Zusatzheizung 21 an einer Gabelung des Arbeitsmediumkreislaufs 32 und des Bypasses 28 zwei Drosselorgane 24 vorgesehen.

In einem weiteren Ausführungsbeispiel können die Drosselorgane 24 auch stromab der Zusatzheizung 21 angeordnet sein.

Vorzugsweise ist die Zusatzheizung 21 mit einem Brennstoff der Brennkraftmaschine betreibbar, so dass die Abgase der Zusatzheizung 21 dem normalen Abgasstrang 31 zuführbar sind. Alternativ ist auch eine elektrische Aufheizung des Arbeitsmediums oder eine Aufheizung mit einem anderen Brennstoff möglich. Bevorzugt wird die Aufheizvorrichtung 35 möglichst nah an der Brennkraftmaschine 2 angeordnet und weist ebenfalls eine Eindüsvorrichtung 20 auf, um eine sehr schnelle Temperaturregelung zu gewährleisten.

Die Wärmetauscher 6, 7, 16 sind in den vorliegenden Ausführungsbeispielen im Gegenstromprinzip mit Kühlmittel, Abgas und Arbeitsmedium betreibbar. In weiteren Ausführungsbeispielen kann auch das Gleichstromprinzip oder Kreuzstromprinzip Anwendung finden.

Zusammenfassend können für die erfindungsgemäße Wärmetauscheranordnung 1 für die Brennkraftmaschine 2 mit der Wärmekraftmaschine 3 folgende wesentlichen Vorteile angeführt werden:
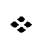 Das vorgeschlagene Konzept hat einen sehr hohen Wirkungsgrad für die Brennkraftmaschine 2 und die Wärmekraftmaschine 3 und somit auch für das Gesamtsystem;
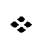 Die Dynamik der Wärmekraftmaschine 3 kann über die Regeleinrichtungen, bestehend aus Drosselorganen (24) und Klappen (27), über die Pumpen 5, 23, sowie die Eindüsvorrichtung 20 sehr gut geregelt werden;
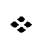 Die Integration des zweiten Wärmetauschers 7 sowie des dritten Wärmetauschers 16 in Abgasnachbehandlungssysteme erlaubt eine extrem kompakte Bauweise.

### Bezugszeichenliste:

- 1.: Wärmetauscheranordnung
- 2.: Brennkraftmaschine
- 3.: Wärmekraftmaschine
- 4.: Entspannungseinrichtung
- 5.: Pumpe
- 6.: erster Wärmetauscher
- 7.: zweiter Wärmetauscher
- 8.: erster Wärmeübertrager
- 9.: zweiter Wärmeübertrager
- 10.: erster Bypass
- 11.: zweiter Bypass
- 12.: dritter Bypass
- 13.: vierter Bypass
- 14.: dritter Wärmeübertrager
- 15.: fünfter Bypass
- 16.: dritter Wärmetauscher
- 17.: vierter Wärmeübertrager
- 18.: sechster Bypass
- 19.: siebenter Bypass
- 20.: Eindüsvorrichtung
- 21.: Zusatzheizung
- 22.: Kondensator
- 23.: zweite Pumpe
- 24.: Drosselorgan
- 25.: Kühlmittelpumpe
- 26.: Schalldämpfer
- 27.: Klappe
- 28.: achter Bypass
- 29.: Kühlmittelkreislauf
- 30.: erste Kurzschlussleitung
- 31.: Abgasstrang
- 32.: Arbeitsmediumkreislauf
- 33.: zweite Kurzschlussleitung
- 34.: Arbeitsmediumeinspritzkreislauf
- 35.: Aufheizvorrichtung

## Patentansprüche

1. Wärmetauscheranordnung (1) für eine Brennkraftmaschine (2) mit einer Wärmekraftmaschine (3) die Heißdampf eines Arbeitsmediums mittels einer Entspannungseinrichtung (4) in Bewegungsenergie umwandelt, wobei das von einer Pumpe (5) förderbare Arbeitsmedium in einem ersten Wärmetauscher (6) von einem Kühlmittel und in einem zweiten Wärmetauscher (7) von einem Abgas der Brennkraftmaschine (2) aufheizbar ist, wobei das Arbeitsmedium in Förderrichtung zuerst den ersten Wärmetauscher (6) und anschließend den zweiten Wärmetauscher (7) durchströmt, wobei der erste Wärmetauscher (6) von dem Abgas durchströmbar ist und wobei in dem ersten Wärmetauscher (6) ein erster Wärmeübertrager (8) für das Abgas und das Arbeitsmedium und ein zweiter Wärmeübertrager (9) für das Kühlmittel und das Arbeitsmedium angeordnet ist,
**dadurch gekennzeichnet, dass** in dem ersten Wärmetauscher (6) ein erster Bypass (10) für das Abgas und ein zweiter Bypass (11) für das Arbeitsmedium zur Umgehung des ersten Wärmeübertragers (8) vorgesehen ist.

2. Wärmetauscheranordnung nach Patentanspruch 1,
**dadurch gekennzeichnet, dass** der erste und der zweite Wärmeübertrager (8, 9) parallel von dem Arbeitsmedium durchströmbar sind.

3. Wärmetauscheranordnung nach Patentanspruch 1,
**dadurch gekennzeichnet, dass** der erste und der zweite Wärmeübertrager (8, 9) nacheinander von dem Arbeitsmedium durchströmbar sind.

4. Wärmetauscheranordnung nach Patentanspruch 3,
**dadurch gekennzeichnet, dass** zuerst der zweite (9) und anschließend der erste Wärmeübertrager (8) von dem Arbeitsmedium durchströmbar ist.

5. Wärmetauscheranordnung nach einem der Patentansprüche 1 bis 4,
**dadurch gekennzeichnet, dass** in dem ersten Wärmetauscher (6) ein dritter Bypass (12) für das Kühlmittel und ein vierter Bypass (13) für das Arbeitsmedium zur Umgehung des zweiten Wärmeübertragers (9) vorgesehen ist.

6. Wärmetauscheranordnung nach einem der Patentansprüche 1 bis 5,
**dadurch gekennzeichnet, dass** in dem zweiten Wärmetauscher (7) ein dritter Wärmeübertrager (14) für das Abgas und das Arbeitsmedium angeordnet ist.

7. Wärmetauscheranordnung nach Patentanspruch 6,
**dadurch gekennzeichnet, dass** in dem zweiten Wärmetauscher (7) ein fünfter Bypass (15) für das Arbeitsmedium zur Umgehung des dritten Wärmeübertragers (14) vorgesehen ist.

8. Wärmetauscheranordnung nach einem der Patentansprüche 1 bis 7,
**dadurch gekennzeichnet, dass** in Strömungsrichtung des Arbeitsmediums hinter dem zweiten Wärmetauscher (7) ein dritter Wärmetauscher (16) angeordnet ist.

9. Wärmetauscheranordnung nach Patentanspruch 8,
**dadurch gekennzeichnet, dass** in dem dritten Wärmetauscher (16) ein vierter Wärmeübertrager (17) für das Arbeitsmedium und das Abgas angeordnet ist.

10. Wärmetauscheranordnung nach Patentanspruch 9,
**dadurch gekennzeichnet, dass** in dem dritten Wärmetauscher (16) ein sechster Bypass (18) für das Arbeitsmedium und ein siebenter Bypass (19) für das Abgas zur Umgehung des vierten Wärmeübertragers (17) vorgesehen ist.

11. Wärmetauscheranordnung nach einem der Patentansprüche 1 bis 10,
**dadurch gekennzeichnet, dass** in zumindest einem Wärmeübertrager (8, 9, 14, 17) eine Eindüsvorrichtung (20) für das Arbeitsmedium angeordnet ist.

12. Wärmetauscheranordnung nach einem der Patentansprüche 1 bis 11,
**dadurch gekennzeichnet, dass** in zumindest einem Wärmetauscher (6, 7, 16) eine Zusatzheizung (21) für das Arbeitsmedium vorgesehen ist.

13. Wärmetauscheranordnung nach einem der Patentansprüche 1 bis 12,
**dadurch gekennzeichnet, dass** in Strömungsrichtung des Arbeitsmediums hinter dem zweiten Wärmetauscher (7) zumindest ein zweiter zweiter Wärmetauscher (7) und/oder ein zweiter dritter Wärmetauscher (16) vorgesehen ist.

14. Wärmetauscheranordnung nach einem der Patentansprüche 1 bis 13,
**dadurch gekennzeichnet, dass** der zweite Wärmetauscher (7) eine Abgasreinigungsanlage ist.

15. Wärmetauscheranordnung nach einem der Patentansprüche 1 bis 14, **dadurch gekennzeichnet, dass** die Wärmetauscher (6, 7, 16) von dem Abgas und/oder dem Kühlmittel im Gegenstromprinzip zum Arbeitsmedium durchströmbar sind.

## Claims

1. A heat exchange arrangement (1) for an internal combustion engine (2) comprising a heat engine (3) with converts superheated steam from a working medium into kinetic energy, using a flash device (4), wherein the working medium, conveyed by a pump (5), is heatable by a coolant in a first heat exchanger (6) and by an exhaust gas from the engine (2) in a second heat exchanger (7), wherein the working medium flows first through the first heat exchanger (6) and then through the second heat exchanger (7) in the direction of flow, wherein the first heat exchanger (6) is flowable through by the exhaust gas and wherein the first heat exchanger (6) contains a first heat transfer device (8) for the exhaust gas and the working medium and a second heat transfer device (9) for the coolant and the working medium,
**characterised in that** the first heat exchanger (6) contains a first bypass (10) for the exhaust gas and a second bypass (11) for the working medium for bypassing the first heat transfer device (8).

2. A heat exchange arrangement according to claim 1,
**characterised in that** the first and the second heat transfer devices (8, 9) are flowed through by the working medium in parallel.

3. A heat exchange arrangement according to claim 1,
**characterised in that** the first and the second heat transfer devices (8, 9) are successively flowed through by the working medium.

4. A heat exchange arrangement according to claim 3,
**characterised in that** first the second heat transfer device (9) and then the first heat transfer device (8) are flowed through by the working medium.

5. A heat exchange arrangement according to any of claims 1 to 4,
**characterised in that** the first heat exchanger (6) contains a third bypass (12) for the coolant and a fourth bypass (13) for the working medium in order to bypass the second heat transfer device (9).

6. A heat exchange arrangement according to any of claims 1 to 5,
**characterised in that** the second heat exchanger (7) contains a third heat transfer device (14) for the exhaust gas and the working medium.

7. A heat exchange arrangement according to claim 6,
**characterised in that** the second heat exchanger (7) contains a fifth bypass (15) for the working medium in order to bypass the third heat transfer device (14).

8. A heat exchange arrangement according to any of claims 1 to 7,
**characterised in that** a third heat exchanger (16) is disposed behind the second heat exchanger (7) in the direction of flow of the working medium.

9. A heat exchange arrangement according to claim 8,
**characterised in that** the third heat exchanger (16) contains a fourth heat transfer device (17) for the working medium and the exhaust gas.

10. A heat exchange arrangement according to claim 9, **characterised in that** the third heat exchanger (16) contains a sixth bypass (18) for the working medium and a seventh bypass (19) for the exhaust gas in order to bypass the fourth heat transfer device(17).

11. A heat exchange arrangement according to any of claims 1 to 10,
**characterised in that** a device (20) for injecting the working medium is disposed in at least one heat transfer devices (8, 9, 14, 17).

12. A heat exchange arrangement according to any of claims 1 to 11,
**characterised in that** an additional heater (21) for the working medium is provided in at least one heat exchanger (6, 7, 16).

13. A heat exchange arrangement according to any of claims 1 to 12,
**characterised in that** at least one second second heat exchanger (7) and/or at least one second third heat exchanger (16) is provided behind the second heat exchanger (7) in the direction of flow of the working medium.

14. A heat exchange arrangement according to any of claims 1 to 13,
**characterised in that** the second heat exchanger (7) is an exhaust gas purification system.

15. A heat exchange arrangement according to any of claims 1 to 14,
**characterised in that** the heat exchangers (6, 7, 16) are flowed through by the exhaust gas and/or the coolant in counter-current with the working medium.

## Revendications

1. Dispositif d'échangeurs de chaleur (1) pour un moteur à combustion interne (2) comportant un moteur thermique (3) qui transforme la vapeur surchauffée d'un fluide de travail en énergie cinétique au moyen d'un dispositif de détente (4), le fluide de travail refoulé par une pompe (5) pouvant être chauffé dans un premier échangeur de chaleur (6) par un fluide caloporteur et dans un second échangeur de chaleur (7) par les gaz d'échappement du moteur (2), le fluide de travail traversant, dans la direction de refoulement tout d'abord le premier échangeur de chaleur (6) puis le second échangeur de chaleur (7), le premier échangeur de chaleur (6) pouvant être traversé par les gaz d'échappement, et, le premier échangeur de chaleur (6) renfermant un premier élément de transfert de chaleur (8) pour les gaz d'échappement et le fluide de travail et un second élément de transfert de chaleur (9) pour le fluide caloporteur et le fluide de travail,
**caractérisé en ce que**
il est prévu, dans le premier échangeur de chaleur (6) une première dérivation (10) pour les gaz d'échappement et une seconde dérivation (11) pour le fluide de travail permettant de contourner le premier échangeur de chaleur (8).

2. Dispositif d'échangeurs de chaleur conforme à la revendication 1,
**caractérisé en ce que**
le premier et le second échangeurs de chaleur (8, 9) peuvent être traversés en parallèle par le fluide de travail.

3. Dispositif d'échangeurs de chaleur conforme à la revendication 1,
**caractérisé en ce que**
le premier et le second échangeurs de chaleur (8, 9) peuvent être traversés l'un après l'autre par le fluide de travail.

4. Dispositif d'échangeurs de chaleur conforme à la revendication 3,
**caractérisé en ce que**
le second échangeur de chaleur (9) puis le premier échangeur de chaleur (8) peut être traversé par le fluide de travail.

5. Dispositif d'échangeurs de chaleur conforme à l'une des revendications 1 à 4,
**caractérisé en ce qu'**
il est prévu dans le premier échangeur de chaleur (6) une troisième dérivation (12) pour le fluide caloporteur et une quatrième dérivation (13) pour le fluide de travail afin de contourner le second échangeur de chaleur (9).

6. Dispositif d'échangeurs de chaleur conforme à l'une des revendications 1 à 5,
**caractérisé en ce que**
le second échangeur de chaleur (7) renferme un troisième élément de transfert de chaleur (14) pour les gaz d'échappement et le fluide de travail.

7. Dispositif d'échangeurs de chaleur conforme à la revendication 6,
**caractérisé en ce qu'**
il est prévu dans le second échangeur de chaleur (7) une cinquième dérivation (15) pour le fluide de travail afin de contourner le troisième élément de transfert de chaleur (14).

8. Dispositif d'échangeurs de chaleur conforme à l'une des revendications 1 à 7,
**caractérisé en ce qu'**
un troisième échangeur de chaleur (16) est monté en aval du second échangeur de chaleur (7) dans la direction d'écoulement du fluide de travail.

9. Dispositif d'échangeurs de chaleur conforme à la revendication 8,
**caractérisé en ce qu'**
un quatrième élément de transfert de chaleur (17) pour le fluide de travail et les gaz d'échappement est monté dans le troisième échangeur de chaleur (16).

10. Dispositif d'échangeurs de chaleur conforme à la revendication 9,
**caractérisé en ce qu'**
il est prévu, dans le troisième échangeur de chaleur (16) une sixième dérivation (18) pour le fluide de travail et une septième dérivation (19) pour les gaz d'échappement de façon à contourner le quatrième échangeur de chaleur (17).

11. Dispositif d'échangeurs de chaleur conforme à l'une des revendications 1 à 10,
**caractérisé en ce qu'**
un dispositif d'injection (20) du fluide de travail est monté dans au moins un élément de transfert de chaleur (8, 9, 14, 17).

12. Dispositif d'échangeurs de chaleur conforme à l'une des revendications 1 à 11,
**caractérisé en ce qu'**
un élément de chauffage supplémentaire (21) du fluide de travail est monté dans, au moins un échangeur de chaleur (6, 7, 16).

13. Dispositif d'échangeurs de chaleur conforme à l'une des revendications 1 à 12,
**caractérisé en ce qu'**
au moins un second second échangeur de chaleur (7) et/ou un second troisième échangeur de chaleur (16) est monté en aval du second échangeur de chaleur (7) dans la direction de circulation du fluide de travail.

14. Dispositif d'échangeurs de chaleur conforme à l'une des revendications 1 à 13,
**caractérisé en ce que**
le second échangeur de chaleur (7) est une installation d'épuration des gaz d'échappement.

15. Dispositif échangeur de chaleur conforme à l'une des revendications 1 à 14,
**caractérisé en ce que**
les échangeurs de chaleur (6, 7, 16) peuvent être traversés par les gaz d'échappement et/ou par le fluide caloporteur selon le principe du contre-courant par rapport au fluide de travail.
